# EUROPEAN PATENT SPECIFICATION

(11) **EP 2 815 553 B1**
(45) Date of publication and mention of the grant of the patent: **08.05.2019**
(21) Application number: 13714036.4
(22) Date of filing: 14.02.2013
(51) Int. Cl.: H04L 29/06, H04W 12/06

(54) **MOBILE APPARATUS SUPPORTING A PLURALITY OF ACCESS CONTROL CLIENTS, AND CORRESPONDING METHODS**
MOBILES GERÄT MIT UNTERSTÜTZUNG EINER VIELZAHL VON ACCESS CLIENTS, UND ENTSPRECHENDE VERFAHREN
APPAREIL MOBILE COMPORTANT UNE PLURALITÉ DE CLIENTS D'ACCÈS, ET MÉTHODES CORRESPONDANTES

(30) Priority: 14.02.2012 US 201261598819 P
(43) Date of publication of application: 24.12.2014
(73) Proprietor: Apple Inc., Cupertino CA 95014 (US)
(72) Inventor: HAGGERTY, David, Cupertino, CA 95014 (US); HAUCK, Jerrold, Cupertino, CA 95014 (US); JUANG, Ben, Cupertino, CA 95014 (US); LI, Li, Cupertino, CA 95014 (US); MATHIAS, Arun, Cupertino, CA 95014 (US); MCLAUGHLIN, Kevin, Cupertino, CA 95014 (US); NARASIMHAN, Avinash, Cupertino, CA 95014 (US); SHARP, Chris, Cupertino, CA 95014 (US); VAID, Yousuf, Cupertino, CA 95014 (US); YANG, Xiangying, Cupertino, CA 95014 (US)
(74) Representative: Gillard, Matthew Paul
(86) International application number: PCT/US2013/026194
(87) International publication number: WO 2013/123233

(56) References cited:
- EP-A1- 2 475 217
- WO-A1-2008/088923
- US-A1- 2004 230 965
- US-A1- 2008 037 786
- US-A1- 2010 082 980

## Description

### Priority

This application claims priority to U.S. Patent Application Serial No. 13/767,593 filed contemporaneously herewith on February 14, 2013 and entitled "METHODS AND APPARATUS FOR LARGE SCALE DISTRIBUTION OF ELECTRONIC ACCESS CLIENTS", which claims priority to U.S. Provisional Patent Application Serial No. 61/598,819 filed February 14, 2012 and entitled "METHODS AND APPARATUS FOR LARGE SCALE DISTRIBUTION OF ELECTRONIC ACCESS CLIENTS.

### Related Applications

This application is related to co-owned, co-pending U.S. Patent Application Serial Nos. 13/457,333 filed on April 26, 2012, and entitled "ELECTRONIC ACCESS CLIENT DISTRIBUTION APPARATUS AND METHODS", 13/464,677 filed on May 4, 2012, and entitled "METHODS AND APPARATUS FOR PROVIDING MANAGEMENT CAPABILITIES FOR ACCESS CONTROL CLIENTS", 13/095,716 filed on April 27, 2011, and entitled "APPARATUS AND METHODS FOR DISTRIBUTING AND STORING ELECTRONIC ACCESS CLIENTS", 13/080,558 filed on April 5, 2011, and entitled "APPARATUS AND METHODS FOR CONTROLLING DISTRIBUTION OF ELECTRONIC ACCESS CLIENTS", 12/952,082 filed on November 22, 2010 and entitled "WIRELESS NETWORK AUTHENTICATION APPARATUS AND METHODS", 12/952,089 filed on November 22, 2010 and entitled "APPARATUS AND METHODS FOR PROVISIONING SUBSCRIBER IDENTITY DATA IN A WIRELESS NETWORK", 13/183,023 filed on July 14, 2011 and entitled "VIRTUAL SUBSCRIBER IDENTITY MODULE DISTRIBUTION SYSTEM", and 12/353,227 filed on January 13, 2009, and entitled "POSTPONED CARRIER CONFIGURATION", 13/093,722 filed on April 25, 2011, and entitled "APPARATUS AND METHODS FOR STORING ELECTRONIC ACCESS CLIENTS", 13/109,851 filed on May 17, 2011 and entitled "METHODS AND APPARATUS FOR ACCESS CONTROL CLIENT ASSISTED ROAMING", 13/079,614 filed on April 4, 2011 and entitled "MANAGEMENT SYSTEMS FOR MULTIPLE ACCESS CONTROL ENTITIES", 13/111,801 filed on May 19, 2011 and entitled "METHODS AND APPARATUS FOR DELIVERING ELECTRONIC IDENTIFICATION COMPONENTS OVER A WIRELESS NETWORK", 13/080,521 filed on April 5, 2011 and entitled "METHODS AND APPARATUS FOR STORAGE AND EXECUTION OF ACCESS CONTROL CLIENTS", 13/078,811 filed on April 1, 2011 and entitled "ACCESS DATA PROVISIONING APPARATUS AND METHODS". 13/287,874 filed on November 2, 2011 and entitled "METHODS AND APPARATUS FOR ACCESS DATA RECOVERY FROM A MALFUNCTIONING DEVICE", 13/080,533 filed on April 5, 2011 and entitled "SIMULACRUM OF PHYSICAL SECURITY DEVICE AND METHODS", and 13/294,631 filed on November 11, 2011 and entitled "APPARATUS AND METHODS FOR RECORDATION OF DEVICE HISTORY ACROSS MULTIPLE SOFTWARE EMULATION".

### Background

### 1. Technological Field

The present disclosure relates generally to the field of wireless communication and data networks. More particularly, the invention is directed to, *inter alia*, methods and apparatus for large scale distribution of electronic access control clients.

### 2. Description of Related Art

Access control is required for secure communication in most prior art wireless radio communication systems. As an example, one simple access control scheme might comprise: (i) verifying the identity of a communicating party, and (ii) granting a level of access commensurate with the verified identity. Within the context of an exemplary cellular system (e.g., Universal Mobile Telecommunications System (UMTS)), access control is governed by an access control client, referred to as a Universal Subscriber Identity Module (USIM) executing on a physical Universal Integrated Circuit Card (UICC) (also referred to as a "SIM card"). The USIM access control client authenticates the subscriber to the UMTS cellular network. After successful authentication, the subscriber is allowed access to the cellular network. As used hereinafter, the term "access control client" refers generally to a logical entity, either embodied within hardware or software, suited for controlling access of a first device to a network. Common examples of access control clients include the aforementioned USIM, CDMA Subscriber Identification Modules (CSIM), IP Multimedia Services Identity Module (ISIM), Subscriber Identity Modules (SIM), Removable User Identity Modules (RUIM), etc.

Prior SIM card based approaches suffer from a number of disabilities. For instance, traditional UICCs support only a single USIM (or more generally "SIM") access control client. If a user wants to authenticate to a cellular network using a different SIM, the user must physically exchange the SIM card in the device with a different SIM card. Some devices have been designed to house two SIM cards at the same time (Dual-SIM phones); however, such Dual-SIM phones do not address the fundamental physical limitations of SIM card devices. For example, information stored within one SIM card cannot be easily consolidated with information stored within another SIM card. Existing Dual-SIM devices cannot access the contents of both SIM cards simultaneously.

Moreover, accessing a SIM card requires a perceptible amount of time for the user; switching between SIM cards to transfer information is undesirable, and is present in both traditional and Dual-SIM devices.

Additionally, existing SIM card issuers and activation entities are generally network-specific, and not ubiquitous for different users in different networks. Specifically, a given user within a given network must activate their phone or obtain replacement SIM cards from a very specific entity authorized to issue the SIM. This can greatly restrict a user's ability to rapidly obtain a valid access privilege, such as when roaming across other networks, replacing their phone, etc.

More recently, electronic SIMs (so-called eSIMs) have been developed, such as by the Assignee hereof. These electronic SIMs provide enhanced flexibility in terms of changeout with another eSIM, transfer to another device, etc. However, existing network infrastructure for distribution and activation of SIMs has not kept pace with these advances, and hence

Accordingly, new solutions and infrastructure are needed to leverage the enhanced flexibility provided by electronic access clients (e.g., eSIMs), and to support secure and ubiquitous distribution thereof.

US 2010/082980 describes a method to connect a wireless communication device to an intended wireless network. The method includes a first step, in which options of authorization methods are presented to be selectable to a user, a second step, in which a first authorization method is automatically selected if an option of a third authorization item is selected, a third step, in which options of encryption methods corresponding to the selected first authorization method are presented to be selectable to the user, a fourth step, in which a first encryption method is automatically selected if a third encryption item is selected, and a fifth step, in which establishment of the connection is attempted by use of the selected first authorization method and the selected first encryption method.

US 2008/037786 discloses a station and a method of collecting information corresponding to security. A wireless communicator transmits a request packet to search a wireless network to at least one external device and receives a response packet to the request packet. An authentication method determiner analyzes the response packet to search for at least one wireless network and determines an authentication method supported by each of the searched wireless networks. A storage unit stores the determined authentication method of each of the searched wireless networks.

EP 2475217 discloses a method for startup of dual-network terminal. The method includes: the application subsystem receiving a push-button signal of startup, and initializing peripherals and an application program after powering up; the application subsystem controlling the 2G wireless communication subsystem to power up, the 2G wireless communication subsystem constructing a first virtual SIM proxy module in a protocol stack thereof, reading information in the SIM card in the subscriber identity module, and storing information in the SIM card into first virtual SIM proxy module; and the application subsystem controlling the 3G wireless communication subsystem to power up, the 3G wireless communication subsystem constructing a second virtual SIM proxy module in a protocol stack thereof, reading information of SIM card in the first virtual SIM proxy module into second virtual SIM proxy module.

WO 2008/088923 describes a wireless device with a capacity for high bandwidth connectivity adapted to provide access to the Internet or other WAN for a single user or multiple concurrent users. The wireless access device acts as a network point of presence to provide access to a number of different devices. Authorization is performed and billing measures are established in real time.

US 2004/230965 discloses a method of managing services in electronic devices such as, for example, mobile handsets and their access to service providers via a service broker that is located on a server-side or in the device itself.

### Summary

The invention is defined in the appended claims, to which reference should now be made.

### Brief Description of the Drawings

FIG. 1 is a logical block diagram of one exemplary electronic Universal Integrated Circuit Card (eUICC) useful in conjunction with various aspects of the present disclosure.
FIG. 2 is a logical block diagram of one exemplary electronic Subscriber Identity Module (eSIM) directory structure useful in conjunction with various aspects of the present disclosure.
FIG. 3 is a logical block diagram representing one exemplary state machine for Subscriber Identity Module (SIM) Dedicated Files (SDF) useful in conjunction with various aspects of the present disclosure.
FIG. 4 is a logical block diagram representing one exemplary state machine for eSIM operation useful in conjunction with various aspects of the present disclosure.
FIG. 5 is a graphical representation of one exemplary eSIM broker network useful with various embodiments of the present disclosure.
FIG. 6 is a logical block diagram of one exemplary tiered security protocol useful with various embodiments of the present disclosure.
FIG. 7 is a graphical representation of one exemplary data structure comprising three (3) pieces, useful in conjunction with various aspects of the present disclosure.
FIG. 8 is a graphical representation of one exemplary OEM certificate hierarchy, useful in conjunction with various aspects of the present disclosure.
FIG. 9 is a logical flow diagram illustrating one exemplary logical sequence for delivering an eSIM to a device without personalization.
FIG. 10 is a logical flow diagram illustrating one exemplary logical sequence for delivering an eSIM to a device with pre-personalization.
FIG. 11 is a logical flow diagram illustrating one exemplary logical sequence for delivering a batch of eSIMs to a device.
FIG. 12 is a logical representation of an electronic Universal Integrated Circuit Card (eUICC) apparatus.

Other features and advantages will immediately be recognized by persons of ordinary skill in the art with reference to the attached drawings and detailed description of exemplary embodiments as given below.

### Brief Description of the Drawings

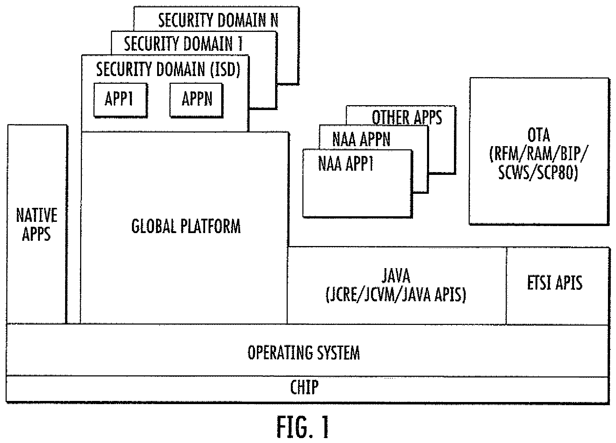

FIG. 1 is a logical block diagram of one exemplary electronic Universal Integrated Circuit Card (eUICC) useful in conjunction with various aspects of the present disclosure.

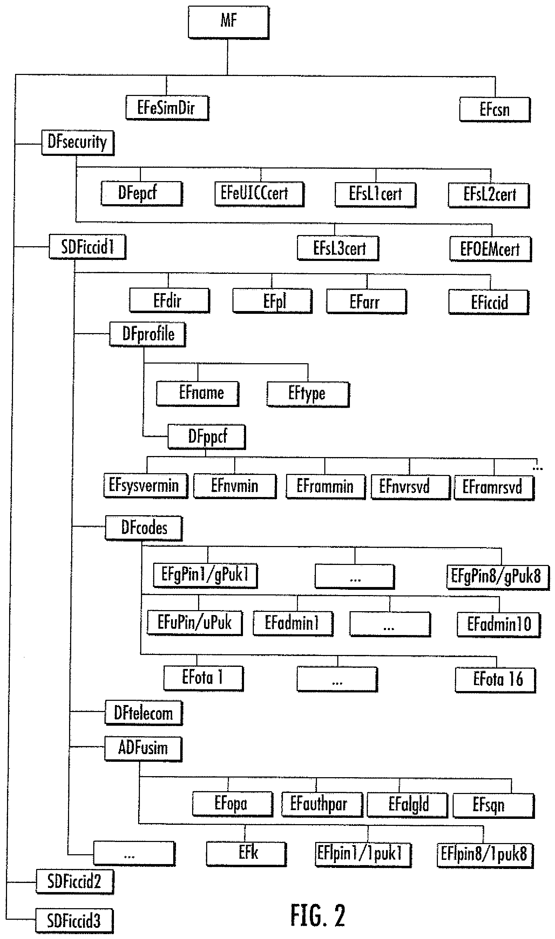

FIG. 2 is a logical block diagram of one exemplary electronic Subscriber Identity Module (eSIM) directory structure useful in conjunction with various aspects of the present disclosure.

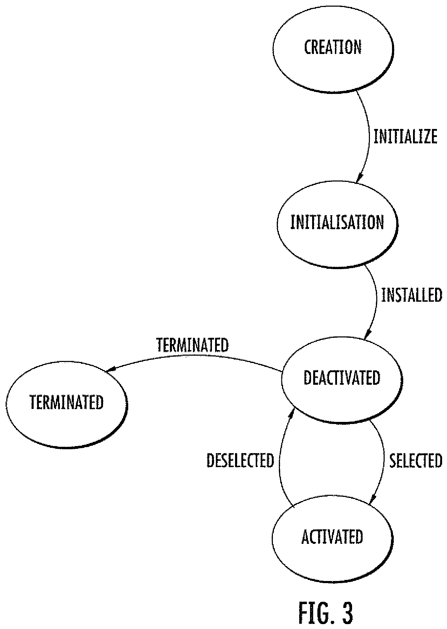

FIG. 3 is a logical block diagram representing one exemplary state machine for Subscriber Identity Module (SIM) Dedicated Files (SDF) useful in conjunction with various aspects of the present disclosure.

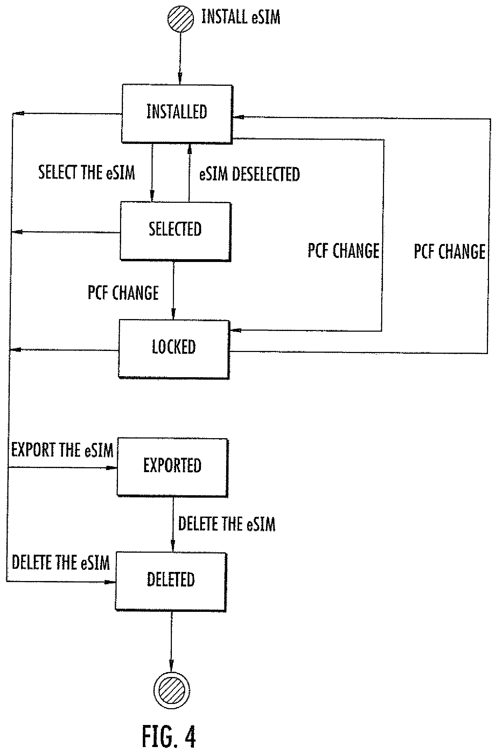

FIG. 4 is a logical block diagram representing one exemplary state machine for eSIM operation useful in conjunction with various aspects of the present disclosure.

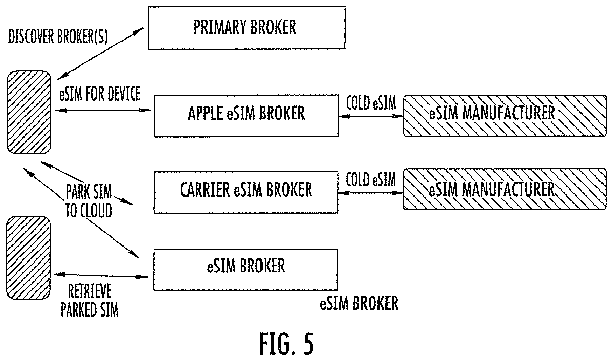

FIG. 5 is a graphical representation of one exemplary eSIM broker network useful with various embodiments of the present disclosure.

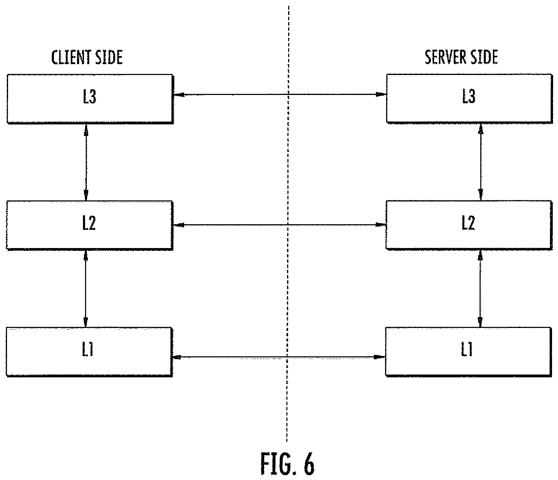

FIG. 6 is a logical block diagram of one exemplary tiered security protocol useful with various embodiments of the present disclosure.

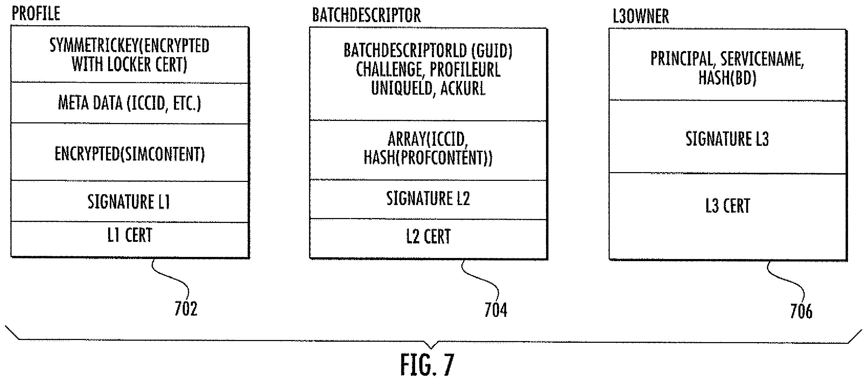

FIG. 7 is a graphical representation of one exemplary data structure comprising three (3) pieces, useful in conjunction with various aspects of the present disclosure.

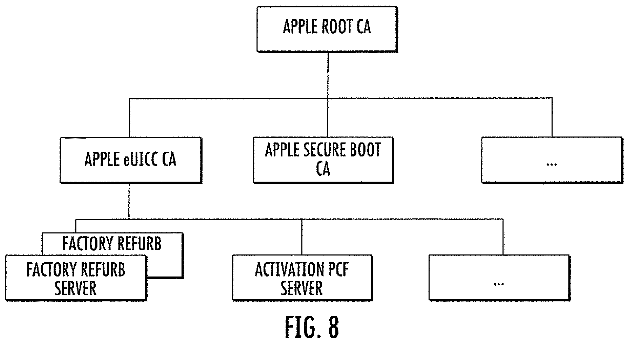

FIG. 8 is a graphical representation of one exemplary OEM certificate hierarchy, useful in conjunction with various aspects of the present disclosure.

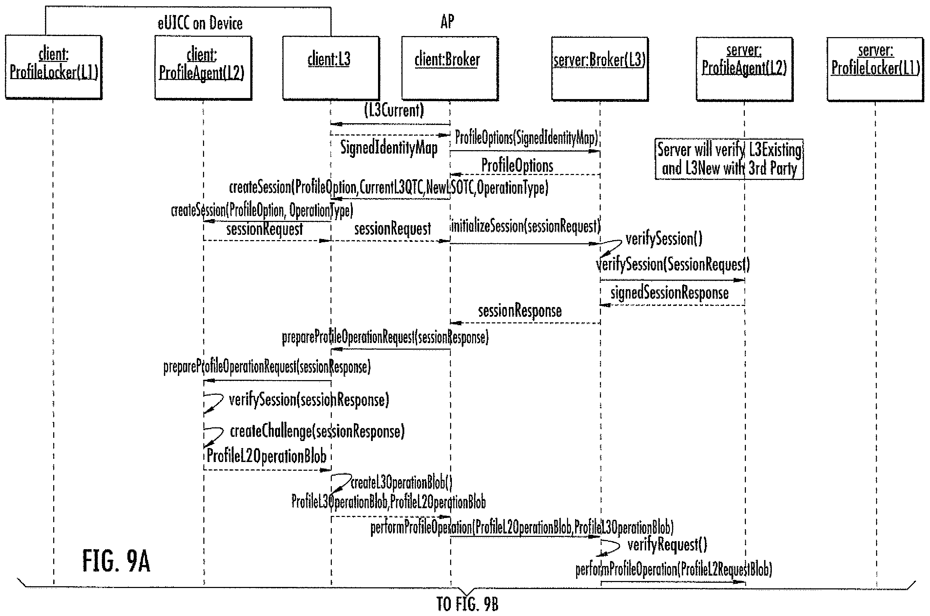

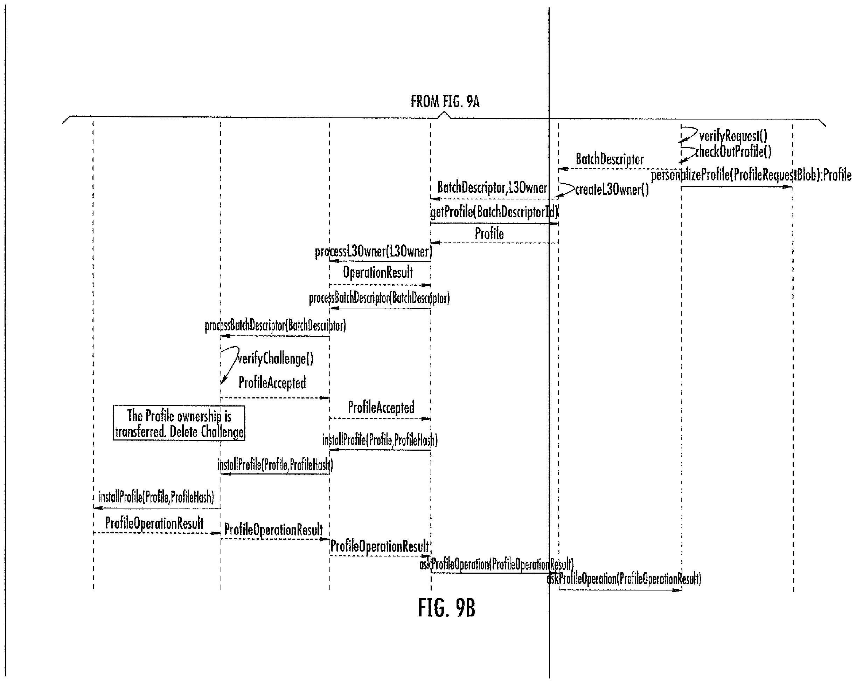

FIG. 9 is a logical flow diagram illustrating one exemplary logical sequence for delivering an eSIM to a device without personalization.

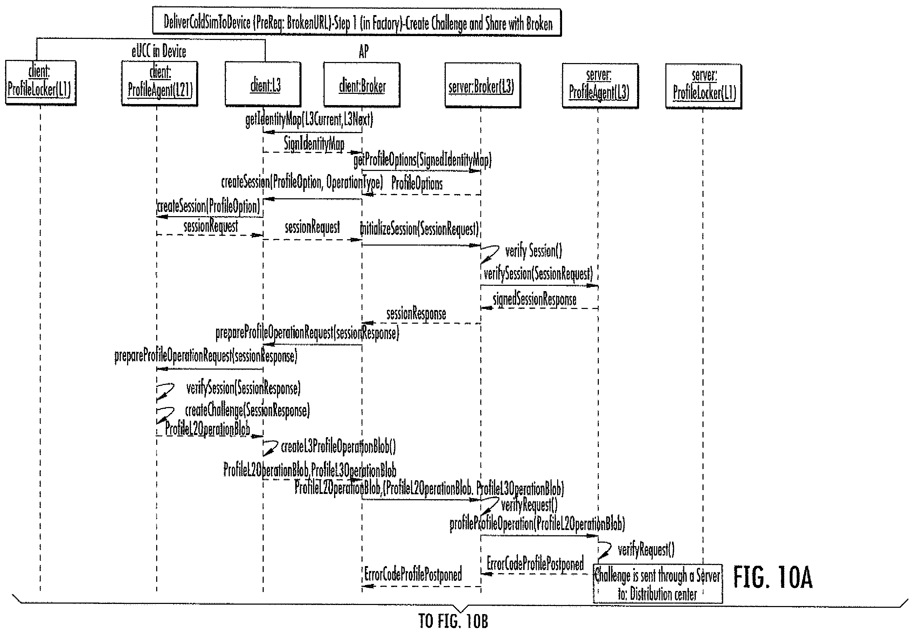

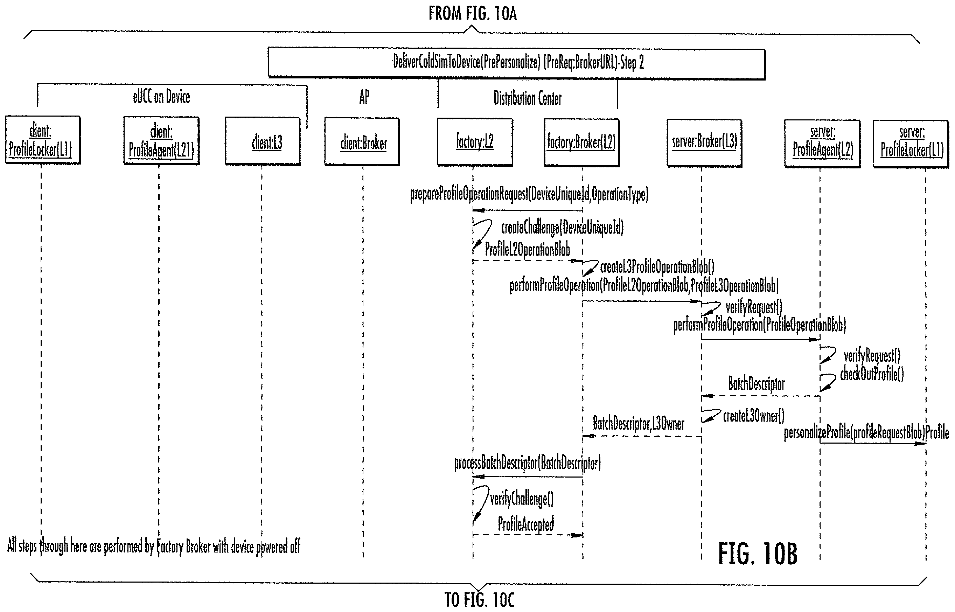

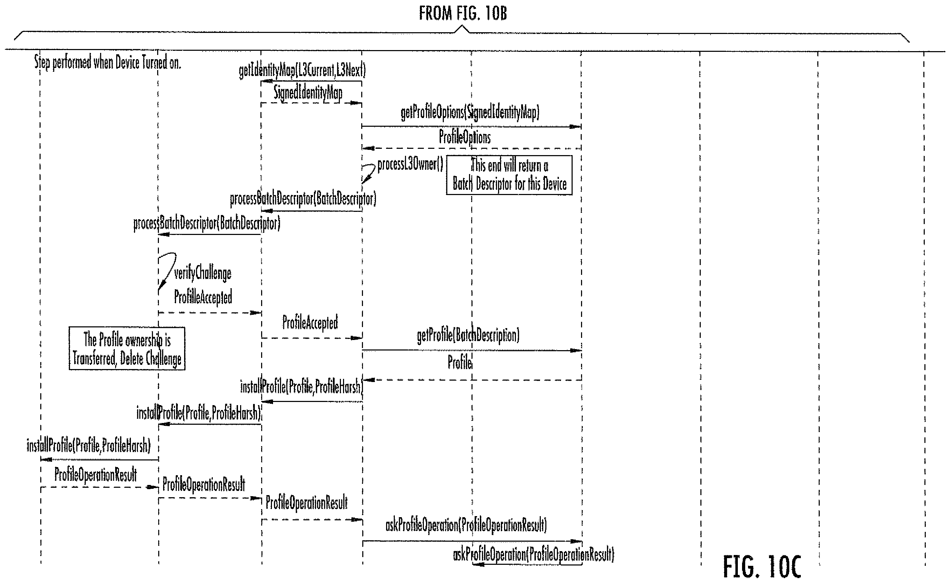

FIG. 10 is a logical flow diagram illustrating one exemplary logical sequence for delivering an eSIM to a device with pre-personalization.

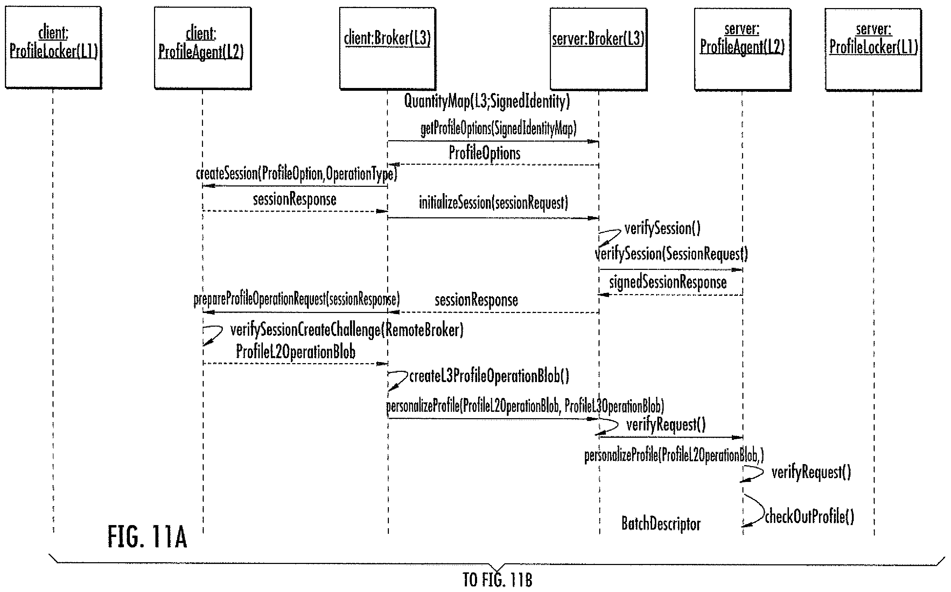

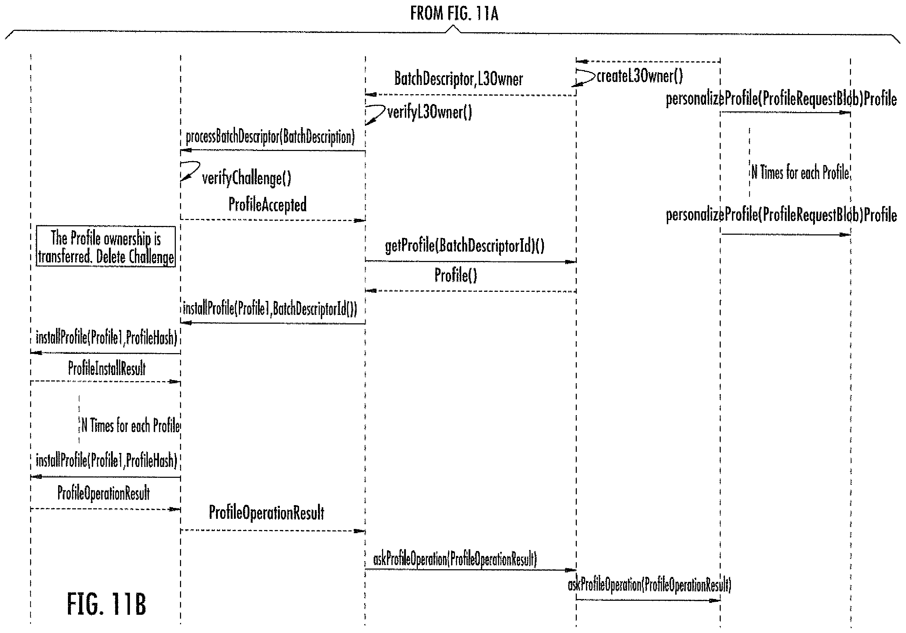

FIG. 11 is a logical flow diagram illustrating one exemplary logical sequence for delivering a batch of eSIMs to a device.

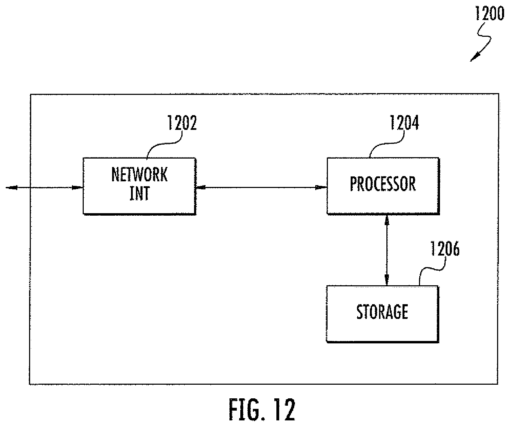

FIG. 12 is a logical representation of an electronic Universal Integrated Circuit Card (eUICC) apparatus.

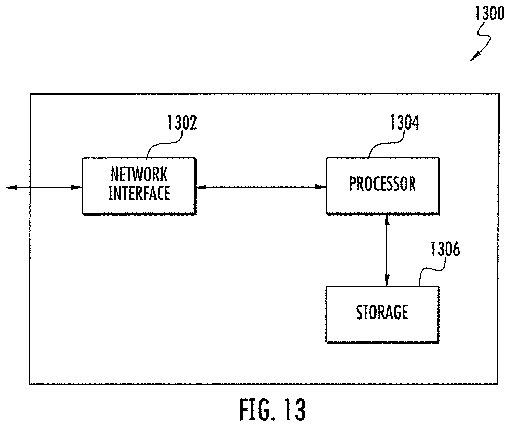

FIG. 13 is a logical representation of an electronic Subscriber Identification Module (eSIM) depot apparatus.

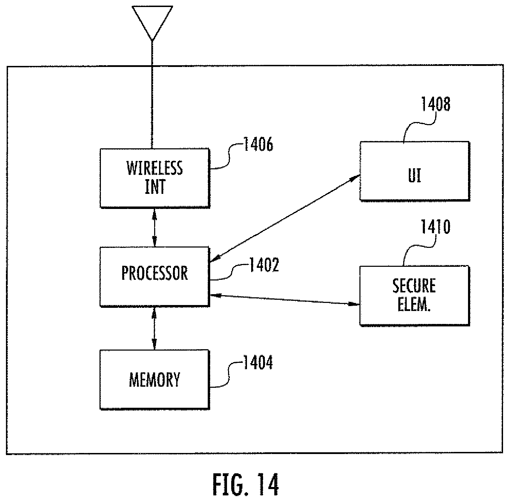

FIG. 14 is a logical flow diagram illustrating one exemplary user apparatus.

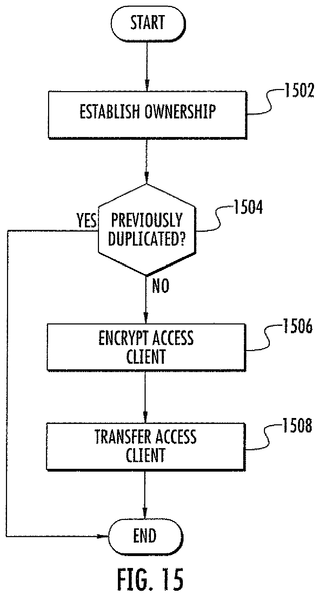

FIG.15 is a logical flow diagram illustrating one embodiment of a method for large scale distribution of electronic access control clients.

All Figures © Copyright 2012-2013 Apple Inc. All rights reserved.

### Detailed Description

Reference is now made to the drawings, wherein like numerals refer to like parts throughout.

### Description of Exemplary Embodiments

Exemplary embodiments and aspects of the present disclosure are now described in detail. While these embodiments and aspects are primarily discussed in the context of Subscriber Identity Modules (SIMs) of a GSM, GPRS/EDGE, or UMTS cellular network, it will be recognized by those of ordinary skill that the present disclosure is not so limited. In fact, the various features of the disclosure are useful in any network (whether wireless cellular or otherwise) that can benefit from storing and distributing access control clients to devices.

As used herein, the terms "client" and "UE" include, but are not limited to wireless-enabled cellular telephones, smartphones (such as for example an *iPhone*™), wireless enabled personal computers (PCs), mobile devices such as handheld computers, PDAs, personal media devices (PMDs), wireless tablets (such as for example an *iPad*™), so-called "phablets", or any combinations of the foregoing.

As used hereinafter, the term "Subscriber Identity Module (SIM)", "electronic SIM (eSIM)", "profile", and "access control client" refer generally to a logical entity, either embodied within hardware or software, suited for controlling access of a first device to a network. Common examples of access control clients include the aforementioned USIM, CDMA Subscriber Identification Modules (CSIM), IP Multimedia Services Identity Module (ISIM), Subscriber Identity Modules (SIM), Removable User Identity Modules (RUIM), etc., or any combinations of the foregoing.

It will also be recognized that while the term "subscriber identity module" is used herein (e.g., eSIM), this term in no way necessarily connotes or requires either (i) use by a subscriber *per se* (i.e., the various features of the disclosure may be practiced by a subscriber or non-subscriber); (ii) identity of a single individual (i.e., the various features of the disclosure may be practiced on behalf of a group of individuals such as a family, or intangible or fictitious entity such as an enterprise); or (iii) any tangible "module" equipment or hardware.

### Exemplary eUICC and eSIM operation -

Various features and functions of the present disclosure are now discussed with respect to one exemplary implementation. In the context of the exemplary embodiment of the present disclosure, instead of using a physical UICC as in the prior art, the UICC is emulated as a virtual or electronic entity such as e.g., a software application, hereafter referred to as an Electronic Universal Integrated Circuit Card (eUICC), that is contained within a secure element (e.g., secure microprocessor or storage device) in the UE. The eUICC is capable of storing and managing multiple SIM elements, referred hereafter as Electronic Subscriber Identity Modules (eSIM). Each eSIM is a software emulation of a typical USIM, and contains analogous programming and user data associated therewith. The eUICC selects an eSIM based upon the eSIM's ICC-ID. Once the eUICC selects the desired eSIM(s), the UE can initiate an authentication procedure to obtain wireless network services from the eSIM's corresponding network operator.

### eUICC Software Architecture -

Referring now to FIG. 1 one exemplary electronic Universal Integrated Circuit Card (eUICC) useful in conjunction with the present disclosure is shown. Examples of an exemplary eUICC are described within co-owned, co-pending U.S. Patent Application No. 13/093,722 filed on April 25, 2011, and entitled "APPARATUS AND METHODS FOR STORING ELECTRONIC ACCESS CLIENTS", previously incorporated by reference in its entirety, although it will be appreciated that other may be used consistent with the present disclosure.

FIG. 1 illustrates one exemplary *Java Card™* eUICC architecture. Other examples of Operating Systems (OS) for use on smart card applications include (without limitation) *MULTOS* and proprietary OSs, *Java Card* being merely illustrative. The OS provides an interface between application software and hardware. Generally, the OS includes services and functionality configured for: Input Output (I/O), Random Access Memory (RAM), Read Only Memory (ROM), non-volatile memory (NV) (EEPROM, flash), etc. The OS may also provide cryptographic services used by higher layers, memory and file management, and communication protocols.

The exemplary *Java* implementation is composed of three pieces: a *Java Card* Virtual Machine (JCVM) (a byte code interpreter); *Java Card* run time environment (JCRE) (which manages card resources, applet execution and other runtime features); and *Java* Application Programming Interfaces (APIs) (a set of customized classes for programming smart card applications).

The JCVM has an on-card component (the byte code interpreter), and an off-card counterpart (the converter). Some compilation tasks may be performed by the converter due to card resource restrictions. Initially, the *Java* compiler creates class files from source code. The converter preprocesses the class files and creates a CAP file. The converter verifies that the load images of the java classes are well formed, checks for Java card language subset violations, and also performs some other tasks. A CAP file contains an executable binary representation of the classes in a Java package. The converter also generates export files, which contain public API information. Only the CAP file is loaded into the card. Another commonly used format is IJC, which can be converted from CAP files. IJC files may be slightly smaller in size compared to CAP files.

Typically, downloading an applet to a card requires an Application Protocol Data Unit (APDU) exchange to load the content of the CAP file into the persistent memory of the card. The on card installer would also link the classes in the CAP file with other classes on the card. Thereafter the installation process creates an instance of the applet and registers the instance with the JCRE. Applets are held in a suspended state until selected.

The foregoing procedure may additionally implement one or more layers of security. In one exemplary embodiment, a Global Platform (GP) provides a secure protocol to manage applications. The GP operates within a secure issuer security domain, which is an on-card representation of the card issuer. The card may also execute other security domains for e.g., application providers.

In one exemplary embodiment, the eUICC is a non-removable component of a device. During operation, the eUICC executes a secure bootstrap OS. The bootstrap OS ensures that the eUICC is secure, and manages execution of the security protocols therein. Examples of a secure bootstrap OS are described within co-owned, co-pending U.S. Patent Application No. 13/080,521 filed on April 5, 2011 and entitled "METHODS AND APPARATUS FOR STORAGE AND EXECUTION OF ACCESS CONTROL CLIENTS", previously incorporated by reference in its entirety. It is further appreciated that different Mobile Network Operators (MNOs) may customize eSIMs to support various degrees of service differentiation. Common examples of customization include, without limitation, proprietary file structures and/or software applications. Due to the configurability of eSIMs, eSIMs can vary significantly in size.

Unlike prior art SIM cards, eSIMs can be freely exchanged between devices according to a secure transaction. Subscribers do not require a "physical card" to move SIMs among devices; however, the actual transaction of eSIMs must be securely protected e.g., via specific security protocols. In one exemplary embodiment, an eSIM is encrypted for a specific receiver before being delivered. In some variants, in addition to the encrypted content, each eSIM may include a meta-data section that is plaintext. A cryptographic signature may further be used to ensure integrity of the plain text content. This meta-data section may be freely provided (even to unsecure entities), to assist in non-secure storage, etc.

### eSIM Software Architecture -

Referring now to FIG. 2, one exemplary electronic Subscriber Identity Module (eSIM) directory structure, embodied within the exemplary eUICC, is disclosed. As shown, the eSIM directory structure has been modified to support the flexibility offered by eSIMs. For example, the eSIM directory structure include *inter alia:* (i) *EFeSimDir* which contains a list of eSIMs installed; (ii) *EFcsn* which contains the card serial number that globally uniquely identifies the eUICC; (iii) *DFsecurity* stores security related data and the private key corresponding to one or more eUICC certificates. In one such variant, the *DFsecurity* information includes: (i) *DFepcf* which contains eUICC platform level PCF; (ii) *EFoemcert* which contains the root certificate and common name of the OEM (OEM credential can be used for special operations such as factory refurbishment); (iii) *EfeUICCcert* which is the certificate of the eUICC; (iv) *EFsL1cert* which is the root certificate of server L1 appliances; (v) *EFsL2cert* which is the root certificate of server L2 appliances; and (vi) *EFsL3cert* which is the root certificate of server L3 appliances.

In one exemplary embodiment, the directory structure further includes SIM Dedicated Files (SDF) which contain file structures that are specific to an eSIM. Each SDF is located directly under the MF. Each SDF has a name attribute and a SID (eSIM ID), such as the Integrated Circuit Card Identifier (ICCID). As shown, each SDF further contains *DFprofiles* and *DFcodes.* Furthermore, in one variant, all profile PCF related EFs are stored under *DFppcf,* which is stored under *DFprofile.*

In one exemplary embodiment, *DFprofile* information includes: (i) *EFname* which is a description of the eSIM (such as name and version of the eSIM); (ii) *EFtype* which describes the type of the eSIM (e.g., regular, bootstrap, and test). Software applications may use this information to e.g., display an icon when a bootstrap eSIM is in use; (iii) *EFsys_ver* which is the minimum version number of the eUICC software to necessary to support the eSIM; (iv) *EFnv_min* which indicates the minimum amount of non volatile memory required by the eSIM; (v) *EFram_min* which indicates the minimum amount of volatile memory required; (vi) *EFnv_rsvd* which indicates the amount of non volatile memory reserved for over the air transactions (OTA); and (vii) *EFram_rsvd* which indicates the amount of volatile memory reserved for OTA.

In one exemplary embodiment, *DFcode* information contains a set of keys for each eSIM. These values cannot be read out of eUICC under most circumstances. One exceptional use case is the export operation which cryptographically wraps and exports the entire eSIM. Since the entire eSIM is encrypted, the values of keys remain secured. In one exemplary embodiment, the *DFcode* information comprises: (i) *ExEFgPinx*/*gPukx* which contains a global PIN (Personal Identification Number) and PUK (PIN Unlock Key); (ii) *EFuPin*/*uPuk* contains the universal PIN and PUK; (iii) *EFadminx* contains ADMIN codes; and (iv) *EFotax* which contains OTA codes. In some variants, there may also be an *ADFusim* which contains additional elements such as: (i) *EFk* which stores K, the 128-bit shared authentication key; (ii) *EFopc* which stores OPc, which is derived from the subscriber key and operator variant algorithm configuration field OP (some variants may store OP instead of OPc); (iii) *EFauthpar* which specifies the length of RES; (iv) *EFalgid* which specifies the network authentication algorithm (for example, Milenage); (v) *EFsqn* which stores SQN; and (vi) *EFlpinx*/*lpukx* which stores the PIN and PUK code for the local PIN.

It will be appreciated by those of ordinary skill reading this disclosure that the foregoing files, structures, or elements are merely exemplary, and may be substituted with others possessing the desired functionality or structure.

Referring now to FIG. 3, one exemplary state machine for SDF operation is illustrated. As shown, the SDF state machine comprises the following states: CREATION, INITIALISATION, OPERATIONAL (ACTIVATED), OPERATIONAL (DEACTIVATED), and TERMINATION.

When an eSIM is first installed, the SDF is created (CREATION) and then initialized (INITIALISATION) with the file structure data included in the eSIM. Once the eSIM has been installed, the SDF transitions to the DEACTIVATED state. During the deactivated state, none of the files are available. Once an eSIM is selected, the SDF transitions from the DEACTIVATED state to the ACTIVATED state; the ACTIVATED state enables access to the files of the SDF. When an eSIM is deselected (either implicitly or explicitly) the SDF transitions from the ACTIVATED state back to the DEACTIVATED state.

Referring now to FIG. 4 one exemplary state machine for eSIM operation is illustrated. As shown, the eSIM state machine comprises the following states: INSTALLED, SELECTED, LOCKED, DEACTIVATED, EXPORTED, and DELETED.

During eSIM installation (INSTALLED), an entry for the eSIM is created in the eUICC registry; the entry indicates one or more associated SDF and applications. During the INSTALLED state, the SDF are set to the DEACTIVATED state and applications are set to an INSTALLED state.

Once the eSIM is selected, the eSIM transitions to the SELECTED state. During the selected state, the SDFs transition to the ACTIVATED state and the applications are transitioned to a SELECTABLE state. If an eSIM is deselected, the eSIM transitions back to the INSTALLED state.

Under certain circumstances, the eSIM may enter a LOCKED state. For example, if the eUICC PCF is changed such that an installed eSIM may no longer be used, then the eSIM will transition to the LOCKED state. In the LOCKED state, the SDF are set to the DEACTIVATED state and applications are set to the LOCKED state. Other miscellaneous states include, the EXPORTED state (i.e., where the eSIM is exported and may no longer be selected), and the DELETED state (i.e., where the eSIM is deleted).

### Network Authentication Algorithms -

Network Authentication Algorithms (NAA) are generally mandatory for operation with Mobile Network Operators (MNOs). While different implementations of NAA exist, the functionality is not substantially different. In certain embodiments, the eUICC may include common packages for NAAs. During eSIM installation, an instance of each NAA app can be created for each eSIM from the pre-loaded packages, to reduce overall loading time of eSIM, and unnecessary memory consumption on eUICC.

Common examples of NAA include without limitation: Milenage, COMP128 V1, COMP128 V2, COMP128 V3, and COMP128 V4, and certain proprietary algorithms. There are a larger number of proprietary algorithms still in use (due to known attacks on COMP128 V1). In one embodiment, network authentication is based on the well known Authentication and Key Agreement (AKA) protocol.

In the unlikely event that a NAA is compromised, replacement NAA schemes may require a software update. During such an event, eSIMs may be patched with a replacement algorithm via e.g., a secure software update. Thereafter, the MNO may enable the replacement algorithm via an existing OTA mechanism.

### Exemplary eSIM Broker Network -

FIG. 5 shows a high level view of one exemplary eSIM broker network useful with various embodiments of the present disclosure. In one exemplary embodiment, the broker network comprises a distributed network of brokers and manufacturers, such that a device may be serviced by multiple brokers, and a broker may order eSIMs from multiple eSIM manufacturers. In some embodiments, there may exist eUICC and/or eSIM profile policies that limit the group of brokers that a device may communicate with for certain eSIM operations. For example, a MNO may require devices that are subsidized by the MNO only communicates with brokers owned by the MNO.

In one such variant, the primary broker provides discovery services to devices, such that the device can identify an appropriate broker. Thereafter, the device can communicate directly with the identified broker for eSIM operations (e.g., such as purchase, installation, export, and import).

Those of ordinary skill in the related network arts will recognize that multiple practical issues arise during the operation of large scale distribution networks, such as that represented by FIG. 5. Specifically, large scale distribution networks must be scalable to handle large bursts of provisioning traffic (such as can occur on a so-called "launch day" of a given mobile user device). One suggested scheme for reducing overall network traffic entails pre-personalizing eSIMs (where possible) prior to launch day. For example so-called "SIM-in" units are already assigned an eSIM at shipment; this pre-assigned eSIM can be pre-personalized for the unit by, for example, encrypting the corresponding eSIM profile with a key specific to the eUICC of the unit.

Other considerations include system reliability, for example, the broker network must be able to recover from various equipment failures. One solution is geographic redundancy where multiple data centers across different locations have duplicate content; however, the network of data centers may actively synchronize with each other to avoid eSIM cloning. Such network synchronization would require extraordinary amounts of network bandwidth. In alternate solutions, each data center may have a separate set of eSIMs; however this requires an significant eSIM overhead.

Ideally, the brokering network can flexibly adapt to various business models. Specifically, for various legal and antitrust reasons, various components of the foregoing broker network may be handled by different parties. Accordingly, security aspects of eSIM traffic needs to be carefully monitored and evaluated. Each eSIM contains valuable user and MNO information. For example, an eSIM may include the shared authentication key (K for USIM and Ki for SIM), which if compromised could be used for SIM cloning. Similarly, eSIMs may also contain applications that may have sensitive user data such as bank account information.

Moreover, it is further appreciated that eUICC software requires further countermeasures for device recovery. Unlike physical SIMs, if the eUICC software goes into an unrecoverable state, the entire device will need to be replaced (which is much more costly than changing a SIM card). Accordingly, exemplary solutions should be able to handle device recovery so as to preclude such draconian measures.

Finally, the network operation should provide for a "good" user experience. Excessive response times, unreliable operation, excessive software crashes, etc. can significantly detract from the overall user experience.

### Exemplary Security Protocol -

Accordingly, a tiered security software protocol is disclosed herein to address various of the foregoing issues. In one exemplary embodiment, the server eUICC and client eUICC software comprise a so-called "stack" of software layers. Each software layer is responsible for a set of hierarchical functions which are negotiated with its corresponding peer software layer. Moreover, each software layer further communicates with its own layers. It is further appreciated that in some cases, the device application processor (AP) may be compromised (e.g., "jailbroken", etc.); consequently, it is recognized that trust relationships exist between the client eUICC and corresponding server eUICC (or other secure entity); i.e., the AP is not trusted.

In one exemplary embodiment, a three (3) tiered system is disclosed. As illustrated in FIG. 6, the security software protocol comprises a Level 1 (L1), Level 2 (L2), and Level 3 (L3). L1 security performs encryption and decryption of eSIM Data, L1 operations are limited to secure execution environments (e.g., an eUICC or Hardware Security Module (HSM)). Within L1, eSIM data can be stored in plain text (i.e., unencrypted) within the logical L1 boundary; outside of the L1 boundary the eSIM data is always securely encrypted. L2 security ensures that an eSIM cannot be duplicated. The L2 boundary ensures that one and only one copy of an eSIM exists. Within the L2 boundary multiple copies may exist. Moreover, L2 security may further embed a challenge into the encrypted eSIM payload; a recipient of the eSIM will compare the received challenge to the challenge stored earlier before installing the eSIM to ensure that its eSIM is not stale (i.e., is the current one and only eSIM). L3 security is responsible for establishing trust, ownership, and verification of the user. For each eSIM, the eUICC may store information to indicate ownership associated with the eSIM

In one exemplary implementation, so-called "challenges" are a critical resource used to associate a specific eSIM instance with an eUICC. Specifically, each eUICC maintains a certain number of challenges for each profile agent, which is the logical entity that maintains L2 security. By verifying that a challenge is valid, the eUICC can be sure that the eSIM is not a stale eSIM (i.e., an invalid duplicate). A number of challenges are created for each eSIM to be personalized. The eUICC deletes a challenge when a matching eSIM is received.

Consider the following pre-personalization scenario, an eUICC creates (or is given) a number of challenges which is provided to the network; the challenges are also saved in non volatile memory of the eUICC. Subsequently thereafter, the network can generate an eSIM for the eUICC which is bound to the pre-generated challenge. When the eUICC receives an eSIM later during device activation, the eUICC can verify that the received eSIM contains the appropriate challenge.

However, one drawback of the foregoing scheme is that a fixed number of challenges can be easily compromised with a denial of service (DOS) attack. In a DOS attack, the eUICC is continuously triggered to generate challenges until all of its challenge resources are exhausted. Accordingly, in one such variant, the eUICC additionally performs a session handshake to authenticate a profile server/agent before processing requests that would trigger eUICC to create a challenge. Additionally, in the unlikely case that resources are exhausted and eUICC is unable to create new challenges, the eUICC may store a separate set of reserved challenges specifically designated for freeing up another set of challenges. In some cases, the eUICC may additionally include an Original Equipment Manufacturer (OEM) credential, which the OEM can use to further control challenge operation.

Referring now to FIG. 7, one exemplary data structure for an eSIM is illustrated. As shown, the exemplary data structure comprises three (3) pieces, one for each of the L1, L2, and L3 security levels. By decoupling security components into distinct levels, overall network operation can be distributed over multiple entities according to a wide variety of options. For example, various network entities may perform only one or two of the security layers (e.g., a eSIM vendor may only handle L2, etc.); this flexibility easily and advantageously accommodates virtually any business arrangement.

As shown in FIG. 7, because asymmetric encryption (i.e., where each entity has a distinct and unique key) is much slower than symmetric operation (where entities share a key), each eSIM profile component 702 is encrypted with a symmetric key, and the symmetric key is encrypted with the L1 public key of the destined eSIM receiver. The eSIM may further includes a plain text section for metadata (such as a text string of the ICCID). The encrypted symmetric key, meta data, and encrypted eSIM content is hashed and signed with the public key of the "donating" L1 entity. The associated L1 certificate is appended, e.g., at the end, for verification.

The batch descriptor component 704 of FIG. 7 contains L2 information for the eSIM. It has a plain text section including a Globally Unique Identifier (GUID), a challenge for the destined eSIM receiver, a unique ID of the eSIM receiver, a URL to retrieve the profile, and the URL to post an installation result to. The batch descriptor also includes a plain text section of an array of elements that consist of: an ICCID for each profile, and a hashed portion of the profile (the metadata section and the encrypted eSIM content). In one embodiment, the hash does not include the symmetric key, such that a batch descriptor can be created without waiting for an actual profile to be generated. For device side operation, a batch descriptor only contains one ICCID and profile hash. For server to server batching transfer, a much larger array is expected. The data content of the batch descriptor is hashed and signed with a L2 public key, and an associated L2 certificate is appended at the end.

The L3 owner component 706 contains L3 information for the eSIM. The principal field identifies the user account associated with the eSIM (e.g., abc@me.com), the service name identifies the service provider to authenticate the user account with. The hash of batch descriptor is included to associate the L2 and L3 data structures. The data may be stored in plain text, hashed and signed with L3 public key. The L3 certificate is appended at the end.

As used herein, there are three (3) types of certificates: eUICC certificates, server appliance certificates, and OEM certificates. In one embodiment, a trusted third party issues certificates for certified eUICCs. Each eUICC contains a private key and an associated certificate, issued by this entity or a subordinate key authority of this entity. In some embodiments, one trusted third party may issue certificates for certified L1, L2, and L3 appliances; or alternately, separate third party entities may issue certificates for L1, L2, or L3 appliances. Where multiple third parties exist, the eUICC has preloaded (or may be provided OTA from a trusted entity) the root Certificate Authority (CA) of the third parties, and can verify messages received from the server appliances based on the appropriate CA.

Referring now to FIG. 8, one exemplary OEM certificate hierarchy is illustrated. The Root Certificate Authority (CA) has a set of intermediate CAs that perform a subset of tasks (e.g., issuing e.g., iOS or comparable device certificates). As shown, an eUICC CA is charged with eSIM specific operations. The eUICC CA may issue certificates for a set of servers; as shown the certificates include e.g., factory refurbishing servers for eUICC maintenance, and activation servers for signing eUICC PCF. The Root CA together with the common name of the eUICC CA are used by the client eUICC to verify the OEM signed messages.

In accordance with the foregoing, in one exemplary embodiment, each client eUICC stores the following security related data: (i) eUICC certificate that is used for eUICC L1, L2, and L3 operations (each eUICC stores a certificate that is used for both L1, L2, and L3 security related operations); (ii) an eUICC private key that is associated with the eUICC certificate; (iii) OEM credentials that include the root certificate of OEMs and the common name of the OEM eUICC CA; (iv) and root certificates of third parties that can certify server appliances. In some variants, certificates in the eUICC may need to be replaced if a signing CA is compromised; for example, if an eUICC CA or server CA is compromised (e.g., a private key has been compromised/lost), two (2) revocation procedures are described below.

According to a first exemplary revocation procedure, if a signing CA that issues eUICC certificates is compromised, the eUICC certificate stored in affected eUICCs should be replaced. Specifically, when the initial certificate request was created for the eUICC, the Certificate Signing Request (CSR) was saved. If the signing CA is compromised, a new certificate can be requested for the eUICC, using the initial CSR. By keeping the same CSR, the eUICC can use the same private key, and a new certificate will be issued containing the same eUICC public key. The OEM can sign the new certificate with the OEM's private key. When the eUICC sends requests to a server broker, the broker can check a revocation list of bad eUICC CAs and reject the request with a specific error to indicate that the certificate needs to be replaced. The AP can retrieve the new eUICC certificate via existing OEM services and send the new certificate to eUICC (the AP does not have to be trusted in this scenario).

Thereafter, the eUICC verifies the OEM signature and ensures that the received public key matches its previously stored public key in the eUICC. In some variants, in order to prevent denial of service (DOS) attacks or replay attacks, the eUICC additionally includes eUICC certificates. The epoch is in one variant increased when a new certificate is issued. The eUICC can verify that the eUICC epoch in the received certificate is higher than that of the current certificate, before storing the new certificate.

Unfortunately, revoking server certificates in eUICC can be challenging due to various eUICC resource constraints; i.e., processing a large revocation list may be untenable for an eUICC. To avoid maintaining revocation lists, in a second revocation scheme, each server certificate is additionally associated with an epoch. If a CA is compromised, the root CA reissues certificates for all legitimate entities, and increases the epoch of each new certificate. Since the number of server certificates will not be large, reissuing certificates can be handled in existing systems. At the client eUICC, the eUICC saves the expected epoch of server L1, L2, and L3 certificates in non-volatile memory. When a received certificate contains a higher epoch, eUICC must update the corresponding NV epoch and reject any future certificates with a lower epoch; i.e., the eUICC will reject rogue servers that have not been signed since the CA was compromised. In some variants, the server may also maintain an eUICC blacklist for compromised eUICCs. Requests from blacklisted eUICC are in one embodiment rejected by the server.

### Policy Control Functions -

Within the context of the foregoing security solution, there are two (2) levels of Policy Control Functions (PCF): (i) eUICC platform level, and (ii) profile level. In one exemplary embodiment, the eUICC PCF may only be updated by OEM, whereas the Profile PCF is controlled by MNOs and is a part of the eSIM. In one such variant, when an eSIM is exported and/or imported, the profile PCF is included as a part of the export/import package.

Referring now to the eUICC PCF, the eUICC PCF may include: (i) a SIM lock policy that specifies the types of eSIMs that the eUICC may activate; (ii) a secret code that can be used to authorize deletion of all eSIMs in an eUICC; (iii) a list of common names of server (L1, L2, and L3) that specify a cluster of server appliances that the eUICC may communicate with (e.g., based on business considerations or methods) (i.e., an inclusive listing); (iv) a list of common names of server (L1, L2, and L3) that specify a cluster of server appliances that the eUICC may not communicate with (i.e., an exclusive listing).

Similarly, the profile PCF may include: (i) a list of common names of servers (L1, L2, and L3) that specify a cluster of depots that the eUICC may export the eSIM to (inclusive); (ii) a list of common names of servers (L1, L2, and L3) that specify a cluster of depots that the eUICC may NOT export the eSIM to (exclusive); (iii) notification URLs and operation types which specify URLs that are sent notifications upon completion of a specified eSIM operation; (iv) auto-expiration parameters where the AP may delete the eSIM once profile has expired; (v) classes of server appliances (L1, L2, and L3) that may be assigned different classes indicating the security levels implemented (a profile may choose to only communicate with server components above certain levels); (vi) an epoch of server certificates (L1, L2 and L3) which are checked during installation (e.g., the eUICC only installs profiles if the epoch of eUICC server certificates are equal to or above the specified epoch); (vii) L3 service names that L3 authentication may use, and/or a list of service names that L3 authentication cannot use; (viii) a minimum version of eUICC system (where the eSIM may only be installed on eUICC systems above the specified the minimum version); (ix) a minimum RAM size required for the eSIM (not including OTA operations); (x) a minimum RAM size reserved for OTA; (xi) a minimum non-volatile (NV) a memory size required for the eSIM (excluding the space served for OTA); (xii) a minimum NV size reserved for OTA

### Example Operation -

Within the context of the foregoing components (e.g., eUICC, eSIM, Broker Network, Security Protocol, etc.), the following exemplary messaging sequences are disclosed. In the sequence diagrams hereinafter, three entities are presented: a broker, a profile agent, and a profile locker, to represent the entities that are responsible for L3, L2, L1 securities respectively. However, it is appreciated that these are logical entities and different network topologies may be subsume or further differentiate the foregoing functions thereof.

The client eUICC is in the illustrated embodiment responsible for all three levels of securities; however, for clarity, the client eUICC is separated into three logical entities to capture functional requirements within the eUICC. Moreover, while there may be separate sets of credentials for L1, L2, and L3 within the client eUICC, it is appreciated that the same (i.e., one credential) may be used since the client device is a single device.

### eSIM Delivery, No Personalization -

FIG. 9 illustrates one exemplary logical sequence for delivering an eSIM to a device without personalization. First, the device identifies the server broker via discovery process (not shown). Once the device attempts to communicate with the server broker, there are three main operations: (i) the device queries the server backend about available eSIM options; (ii) the device requests that the server personalizes an eSIM if the requested eSIM has not been pre-personalized; and (iii) the device downloads the actual eSIM and install it.

In the first stage, *getProfileOptions* is used by the device to query the server backend about available eSIM options. The eUICC associated with the device is identified by its *UniqueId,* which for example can be the card serial number. The broker utilizes sales information to determine one or more eSIM options available to the device. For unlocked devices, there may be a very large set of available eSIMs; thus, in some embodiments, common options that are likely to be chosen by the user are displayed (e.g., based on location, cost, etc.). The server returns an array of profile providers (MNO) and profile types (e.g. prepaid/postpaid) that is valid for the device.

In some scenarios, the type of eSIMs available to the user may be considered private information, therefore in some variants the *getProfileOptions* API further requires the device eUICC L3 to sign the unique identifier of the eUICC, and include the signed identifier in the API. The server broker (or broker server) can verify the signature before processing the request. This prevents a malicious party from retrieving users' profile options by sending the masqueraded requests. In some variants, the communication between the device broker and the server broker uses a security protocol (e.g., transport layer security (TLS)) to prevent capture and replay attacks.

In one embodiment, a *getProfileOptions* contains two L3 tokens to verify the current and new ownership of the eSIM. The current L3 token may be a unique identifier or so-called "faux card" scratch code. The new L3 token can be information used to associate a user account with an eSIM, for example, a sign-on token for an *iCloud* account (e.g., where the device has logged into a user account to retrieve a token). Both L3 tokens are signed by the eUICC L3. The server broker validates the L3 tokens using an associated authentication service. For example, it may communicate with a network server (e.g., the Assignee's *iCloud* server) or a third party service to validate the sign-on token.

To optimize performance and avoid duplicate authentication, after authenticating the token passed by the device, the server broker generates a one time code (OTC) and pass the OTC back to the device. The device can use the OTC as a proof that the server has already performed L3 authentication. The complete data binary large object (BLOB) may include the generated OTC, unique device identifier (e.g. card serial number (CSN)), principal, service provider, and a timestamp to indicate validity of the OTC. The BLOB is hashed and signed by the broker. In one variant, the hashing is performed with a symmetric key to improve overall performance. If *getProfileOptions* returns an array of eSIMs, the user is prompted to make a selection.

In the second stage, the device would call *personalizeProfile* to request the server backend to personalize an eSIM. Before the device sends the personalization request to the server, there is a session handshake between the eUICC profile agent and server profile agent for authentication. The device broker and eUICC create a session, based on the profile option that the user has chosen, and the current L3 code and new L3 code sent by the server broker. The eUICC can save this information to fill in the profile request sent subsequently thereafter. The eUICC profile agent generates a session id, which will be echoed back by the server agent for authentication subsequent thereto.

The device broker can now pass a session request generated by eUICC to the server broker. The server broker can check the request. For example, the server broker determines if the requesting eUICC, represented by unique ID, is serviceable. Since the unique identitifer is included in plaintext, the server broker can retrieve the information even though a more thorough verification of the request is performed by server profile agent.

If the request is appropriate, then the server broker passes the request to the profile agent. The profile agent verifies the request cryptographically, by verifying the eUICC L2 certificate and using the eUICC L2 public key to verify the L2 signature. Once verification passes, the server profile agent creates a *SessionResponse,* including a plaintext section containing: the received session identifier and unique identifier, a L2 signature (generated by hashing the plain text section and signing the hash using server profile agent's private key), and the server profile agent's certificate.

The session response is sent from server profile agent to the server broker, which then forwards the session response to the device broker. The device broker passes the response to the eUICC in a *prepareProfileRequest* message. The eUICC L2 verifies the *sessionReponse* by verifying the server profile agent's certificate and the L2 signature. The eUICC L2 also verifies that the session identifier and unique identifier match the information in eUICC. Once verification passes, the eUICC creates a challenge for the personalized profile request. The challenge is committed to non-volatile memory. The eUICC then creates the profile request BLOB, including L1, L2 and L3 related information. Detailed structures are listed in APPENDIX A hereto, incorporated by reference herein.

Thereafter, the profile request BLOB is sent to the server backend. The server broker performs L3 verification and includes L3 owner information (e.g. principal and service provider) to associate the eSIM with; the server profile agent creates a batch descriptor, and the server profile locker personalizes the eSIM for the eUICC. The personalized eSIM may be distributed to a content delivery network (CDN) for performance optimization.

After the device broker receives the profile descriptor and associated L3 owner information, it retrieves the associated profile via *getProfile* by providing the received GUID (Globally Unique Identifier).

Once the device broker has retrieved a profile descriptor and profile, it instructs the client eUICC to install the eSIM. The call flows shows three separate calls, *processL3Owner, processProfileDescriptor* and *installFrofile,* however it is appreciated that in actual implementation, these three logical calls can be combined within a single transaction. The eUICC performs L3, L2, and L1 verification; once verified, the eSIM is installed. The associated challenge is deleted. The L3 Owner information is saved together with the eSIM to indicate proper ownership. L3 Owner information can be provided at a later point if the user exports the eSIM.

Once the profile is installed, the eUICC returns the installation results to the server. Server infrastructure can use the notification to trigger a purge of cached content in the content delivery network (CDN). In some cases, this information may also be used for notification services indicating e.g., successful installation, partial installation, unsuccessful installation, etc.

### eSIM Delivery, Pre-personalization -

FIG. 10 illustrates one exemplary logical sequence for delivering an eSIM to a device with pre-personalization. Similar to the scheme of FIG. 9, delivering a pre-personalized eSIM requires three (3) stages.

Initially, during manufacture of the client device, a factory broker instructs the eUICC to create a challenge for eSIM pre-personalization later. However, unlike the scheme of FIG. 9, the device is not yet associated with a MNO, or eSIM type; rather these fields are populated with a special value to indicate that a selection will be made later. The complete content of the profile request BLOB is saved for personalization use later.

The second stage is triggered automatically by e.g., shipment notification, device sale, etc. The L2 (client profile agent) in the distribution center acts as a proxy for the client eUICC L2. While the eUICC profile request BLOB does not contain a MNO and eSIM type, the client profile agent can regenerate the BLOB by replacing these fields with updated information. The client profile agent can create its own challenge and replace the eUICC challenge. The client profile agent will sign the content with its own private key (otherwise all L2s would require unique challenges). The BLOB will contain the eUICC's L1 signature, the eUICC still needs to decrypt the personalized eSIM. The new profile request BLOB is sent to the server broker using the existing *personalizeProfile* request. Hereinafter, the procedure is no different than the procedure of FIG. 9.

Moreover, it is further appreciated that even if a MNO would like to support its own brokering system, the disclosed pre-personalization process can use the same interface. The server broker will return a batch descriptor to the client and personalize the eSIM. The client profile agent would create a new batch descriptor with the eUICC's challenge, to be used when the eUICC requests the profile later.

Finally, in the last stage, when the user powers up the device, the device performs *getProfileOptions* to check available eSIM options. As an eSIM is already pre-personalized, the response would include a valid batch descriptor and the device no longer needs to call *personalizeProfile.* It would use information in the descriptor to directly retrieve the eSIM via *getProfile* request.

### eSIM Delivery, Batch Delivery -

FIG. 11 illustrates one exemplary logical sequence for delivering a large number (batch) of eSIMs e.g., between two entities. In one embodiment, the client broker and server broker are secure entities which have a secure communication via e.g., Virtual Private Network (VPN). "Batching" is supported such that a client may place an order for a large quantity of eSIMs.

In this scenario, when the profile agent receives a request to personalize profiles, the profiles do not need to be personalized if the batch descriptor is returned; rather, the client may request actual profiles at a later stage as desired. In batch descriptor operation, the hash of profile content is calculated over the encrypted profile (wrapped with a symmetric key) and profile metadata, neither of which requires profile to be personalized. This also does not require L1 to store the symmetric key per eUICC, which would otherwise burden L1 with additional storage requirement that is difficult to meet. In one embodiment, the encrypted eSIM (wrapped with a symmetric key) can be stored off-storage. The symmetric key would be wrapped with a L1 RFS (remote file system) key and the wrapped key may be saved in off-storage together with the encrypted eSIM.

### eSIM Export -

Finally, once an eSIM is stored to a client device, the user may choose to export an eSIM off the device and later import the eSIM to the same or a different device. One objective is to support eSIM swap. Another objective is to free up eUICC memory to store additional eSIMs. When exporting, there are three possible scenarios: (i) exporting to a cloud, (ii) exporting to an AP (for off-board storage), and (iii) device-to-device eSIM transfer. Similarly, the user may import from a cloud, AP, or another device.

During eSIM installation, user account information is associated to the eSIM (unless the user opts out). The account information includes sufficient information for L3 authentication. For example, it may include a principal (e.g. x2z@yahoo.com) and the associated service provider for authentication. If no account information is associated with the eSIM, the user may export the eSIM with other authentication methods. One such embodiment, includes a physical button that is securely connected to eUICC to prove physical possession of the device. In another embodiment, each eSIM includes a unique password, the user must have the password to prove their ownership. Using OEM credentials is yet another option.

When the user exports an eSIM, the AP retrieves a list of installed profiles from eUICC; for each profile, eUICC also returns the associated principal and a nonce generated for anti-replay. When the user chooses to export a profile, the AP uses information contained in the principal to obtain a single sign-on (SSO) token from the service provider, where the user would be prompted to enter username and password for the purpose. The SSO token is passed together with principal and nonce to the server broker in export request. The server broker can process the authentication with the service provider, using the SSO token supplied by the device. Once authentication passes, the flow mirrors eSIM delivery to the device, except that the client and server roles are reversed. At a high level, the server broker initiates a session with the eUICC, creates a request BLOB for the export. In the request, it includes the nonce that the eUICC generated, to indicate that the operation has passed L3 authentication. The eUICC verifies the request BLOB, encrypts the eSIM with the server agent's public key, creates a batch descriptor and L3 owner information for the eSIM. The eSIM together with L3 and L2 information can be sent to the server.

Once eUICC encrypts the eSIM for export, the eUICC gives up ownership of the eSIM and no longer uses the eSIM or exports the eSIM to any other entities. In some cases, the eUICC may save the encrypted copy to help recovery from connection loss (i.e., if the encrypted eSIM never reached the server). Alternatively, the AP may save a copy of the encrypted eSIM for retransmission in the event of a connection failure. Servers may return acknowledgements which triggers the AP to clean up the stored copy.

In some embodiments, export can also be initiated from a web portal. If the user loses his device, he may use a web portal to export eSIMs from his device. In this case, the web portal would communicate with the device to initiate export operation. The flow is similar except that the user would use web portal instead of AP to obtain the SSO token for ownership verification.

### Apparatus -

Various apparatus useful in conjunction with the above described methods are now described in greater detail.

### eUICC Appliance -

FIG. 12 illustrates one exemplary embodiment of a eUICC appliance 1200 in accordance with the present disclosure. The eUICC appliance may comprise a stand-alone entity, or be incorporated with other network entities such as e.g., servers. As shown, the eUICC appliance 1200 generally includes a network interface 1202 for interfacing with the communications network, a processor 1204, and one or more storage apparatus 1206. The network interface is shown connecting to the MNO infrastructure, so as to provide access to other eUICC appliances, and direct or indirect access to one or more mobile devices, although other configurations and functionalities may be substituted.

In one configuration, the eUICC appliance is capable of: (i) establishing communications with another eUICC (either a eUICC appliance or client device), (ii) securely storing an eSIM, (iii) retrieving a securely stored eSIM, (iv) encrypting an eSIM for delivery to another specific eUICC, and (v) sending multiple eSIMs to/from an eSIM depot.

### eSIM Depot -

FIG. 13 illustrates one exemplary embodiment of an eSIM depot 1300 in accordance with the present disclosure. The eSIM depot 1300 may be implemented as a stand-alone entity, or be incorporated with other network entities (e.g., an eUICC appliance 1200, etc.). As shown, the eSIM depot 1300 generally includes a network interface 1302 for interfacing with the communications network, a processor 1304, and a storage apparatus 1306.

In the illustrated embodiment of FIG. 1300, the eSIM depot 304 is capable of: (i) inventory management of eSIMs (e.g., via associated metadata), (ii) responding to requests for encrypted eSIMs (e.g., from other eSIM depots, and/or eUICC appliances 1200), (iii) managing subscriber requests for eSIMs.

For example, when an eSIM is stored at an eSIM depot 1300 by a user, the eSIM may be stored with an intended destination (e.g., to facilitate transfer to another device), or parked indefinitely. In either case, the eSIM depot can provide the eSIM to the eUICC appliance for secure storage and for subsequent encryption for the destination device.

### User Apparatus -

Referring now to FIG. 14, exemplary user apparatus 1400 in accordance with various aspects of the present disclosure is illustrated.

The exemplary UE apparatus of FIG. 14 is a wireless device with a processor subsystem 1402 such as a digital signal processor, microprocessor, field-programmable gate array, or plurality of processing components mounted on one or more substrates. The processing subsystem may also comprise an internal cache memory. The processing subsystem is in communication with a memory subsystem 1404 including memory which may for example, comprise SRAM, flash, and/or SDRAM components. The memory subsystem may implement one or a more of DMA type hardware, so as to facilitate data accesses as is well known in the art. The memory subsystem contains computer-executable instructions which are executable by the processor subsystem.

In one exemplary embodiment, the device includes one or more wireless interfaces 1406 adapted to connect to one or more wireless networks. The multiple wireless interfaces may support different radio technologies such as GSM, CDMA, UMTS, LTE/LTE-A, WiMAX, WLAN, Bluetooth, etc. by implementing the appropriate antenna and modem subsystems of the type well known in the wireless arts.

The user interface subsystem 1408 includes any number of well-known I/O including, without limitation: a keypad, touch screen (e.g., multi-touch interface), LCD display, backlight, speaker, and/or microphone. However, it is recognized that in certain applications, one or more of these components may be obviated. For example, PCMCIA card-type client embodiments may lack a user interface (as they could piggyback onto the user interface of the host device to which they are physically and/or electrically coupled).

In the illustrated embodiment, the device includes a secure element 1410 which contains and operates the eUICC application. The eUICC is capable of storing and accessing a plurality of access control clients to be used for authentication with a network operator. The secure element includes a secure processor executing software stored in a secure media. The secure media is inaccessible to all other components (other than the secure processor). Moreover, the exemplary secure element may be further hardened to prevent tampering (e.g., encased in resin) as previously described. The exemplary secure element 1410 is capable of receiving and storing one or more access control clients. In one embodiment, the secure element stores an array or plurality of eSIMs associated with a user (e.g., one for work, one for personal, several for roaming access, etc.), and/or according to another logical scheme or relationship (e.g., one for each of multiple members of a family or business entity, one for each of personal and work use for the members of the family, and so forth). Each eSIM includes a small file system including computer readable instructions (the eSIM program), and associated data (e.g., cipher keys, integrity keys, etc.)

The secure element is further adapted to enable transfer of eSIMs to and/or from the mobile device. In one implementation, the mobile device provides a GUI-based acknowledgement to initiate transfer of an eSIM.

Once the user of the mobile device opts to activate an eSIM, the mobile device sends a request for activation to an activation service. The mobile device can use the eSIM for standard Authentication and Key Agreement (AKA) exchanges.

### Methods -

Various methods useful in conjunction with the above described methods are now described in greater detail.

FIG. 15 illustrates one embodiment of a method for large scale distribution of electronic access control clients.

At step 1502, a first device establishes ownership of one or more electronic access control clients.

At step 1504, the first device determines if one or more electronic access control clients have not been previously duplicated.

At step 1506, the first device encrypts the one or more electronic access control clients for transfer to the second device.

At step 1508, the first device and second device exchange or transfer the encrypted one or more electronic access control clients.

Myriad other schemes for large scale distribution of electronic access control clients will be recognized by those of ordinary skill given the present disclosure.

It will be recognized that while certain aspects of the disclosure are described in terms of a specific sequence of steps of a method, these descriptions are only illustrative of the broader methods of the disclosure, and may be modified as required by the particular application. Certain steps may be rendered unnecessary or optional under certain circumstances. Additionally, certain steps or functionality may be added to the disclosed embodiments, or the order of performance of two or more steps permuted. All such variations are considered to be encompassed within the disclosure disclosed and claimed herein.

While the above detailed description has shown, described, and pointed out novel features of the disclosure as applied to various embodiments, it will be understood that various omissions, substitutions, and changes in the form and details of the device or process illustrated may be made by those skilled in the art without departing from the disclosure. The foregoing description is of the best mode presently contemplated of carrying out the disclosure. This description is in no way meant to be limiting, but rather should be taken as illustrative of the general principles of the disclosure. The scope of the disclosure should be determined with reference to the claims

## Claims

1. A method for distributing electronic access control clients to mobile wireless devices, the method comprising, at an apparatus that manages a plurality of electronic access control clients:
determining an ownership of at least one electronic access control client of the plurality of electronic access control clients;
determining whether the at least one electronic access control client has not been previously duplicated; and upon determining that the at least one electronic access control client has not been previously duplicated;
encrypting the at least one electronic access control client to produce an encrypted electronic access control client for transfer to the mobile wireless device, and
transferring the encrypted electronic access control client to the mobile wireless device.

2. The method of claim 1, wherein determining the ownership of the at least one electronic access control client includes evaluating a level 3, L3, security certificate.

3. The method of claim 1, wherein the determining whether the at least one electronic access control client has not been previously duplicated comprises:
issuing, to an Electronic Universal Integrated Circuit Card, eUICC, included in the mobile wireless device, a challenge question and
receiving, from the eUICC, a response to the challenge question, wherein the response indicates whether a duplicate of the at least one electronic access control client is stored by the eUICC.

4. The method of claim 3, wherein encrypting the at least one electronic access control client comprises encrypting the at least one electronic access control client using a key that is specific to the eUICC.

5. The method of claim 3, further comprising:
subsequent to transferring the encrypted electronic access control client to the mobile wireless device:
receiving, from the mobile wireless device, an electronic access control client stored by the eUICC, wherein the electronic access control client is different than the at least one electronic access control client.

6. The method of claim 1, wherein each electronic access control client of the plurality of electronic access control clients is an electronic Subscriber Identity Module, eSIM.

7. An apparatus for distributing electronic access control clients to mobile wireless devices, the apparatus comprising:
a memory that stores a plurality of electronic access control clients; and
a processor, configured to:
determine an ownership of at least one electronic access control client of the plurality of electronic access control clients;
determine whether the at least one electronic access control client has been previously duplicated and
upon determining that the at least one electronic access control client has not been previously duplicated:
encrypt the at least one electronic access control client to produce an encrypted electronic access control client for transfer to the mobile wireless device, and
transfer the encrypted electronic access control client to the mobile wireless device.

8. The apparatus of claim 7, wherein the determining whether the at least one electronic access control client has been previously duplicated comprises:
issuing, to an Electronic Universal Integrated Circuit Card, eUICC, a challenge question; and
receiving, from the eUICC, a response to the challenge question, wherein the response indicates whether a duplicate of the at least one electronic access control client is stored by the eUICC.

9. The apparatus of claim 8, wherein encrypting the at least one electronic access control client comprises encrypting the at least one electronic access control client using a key that is specific to the eUICC.

10. The apparatus of claim 8, wherein the processor is further configured to, subsequent to transferring the encrypted electronic access control client to the mobile wireless device:
receive, from the eUICC, an electronic access control client stored by the eUICC, wherein the electronic access control client is different than the at least one electronic access control client.

11. The apparatus of claim 7, wherein each electronic access control client of the plurality of electronic access control clients is an electronic Subscriber Identity Module, eSIM.

12. A mobile wireless device configured to authenticate with wireless networks using electronic access control clients, the mobile wireless device comprising:
a secure memory; and
a processor, configured to:
receive, from an apparatus that manages a plurality of electronic access control clients, a request to perform an action that identifies whether a duplicate of an electronic access control client managed by the apparatus is stored within the secure memory;
respond to the request by evaluating a challenge question associated with the secure memory to identify that the electronic access control client is not a duplicate; and
in response to identifying that the electronic access control client is not a duplicate:
receive, from the apparatus, the electronic access control client, and
store the electronic access control client into the secure memory.

13. The mobile wireless device of claim 12, wherein the electronic access control client is encrypted in accordance with a key that is specific to the mobile wireless device.

14. The mobile wireless device of claim 12, wherein the secure memory comprises a virtual entity for a physical Universal Integrated Circuit Card.

15. The mobile wireless device of claim 12, wherein the electronic access control client is an electronic Subscriber Identity Module, eSIM.

## Patentansprüche

1. Verfahren zum Verteilen von elektronischen Zugangskontrollclients an mobile drahtlose Vorrichtungen, wobei das Verfahren an einer Vorrichtung, die eine Vielzahl von elektronischen Zugangskontrollclients verwaltet, umfasst:
Bestimmen eines Eigentums an mindestens einem elektronischen Zugangskontrollclient aus der Vielzahl von elektronischen Zugangskontrollclients;
Bestimmen, ob der mindestens eine elektronische Zugangskontrollclient nicht vorher dupliziert wurde; und
bei der Feststellung, dass der mindestens eine elektronische Zugangskontrollclient nicht zuvor dupliziert wurde;
Verschlüsseln des mindestens einen elektronischen Zugangskontrollclients, um einen verschlüsselten elektronischen Zugangskontrollclient zur Übertragung an die mobile drahtlose Vorrichtung zu erzeugen, und Übertragen des verschlüsselten elektronischen ZugangskontrollClients an die mobile drahtlose Vorrichtung.

2. Verfahren gemäß Anspruch 2, wobei die Bestimmung des Eigentums an mindestens einem elektronischen Zugangskontrollclient die Bewertung eines Level 3, L3, Sicherheitszertifikats beinhaltet.

3. Verfahren gemäß Anspruch 1, wobei die Bestimmung, ob der mindestens eine elektronische Zugangskontrollclient nicht vorher dupliziert wurde, umfasst:
Ausgabe einer Challenge-Frage an eine electronic Universal Integrated Circuit Card ,eUICC, die in der mobilen drahtlosen Vorrichtung enthalten ist, und
Empfangen einer Antwort auf die Challenge-Frage von der eUICC, wobei die Antwort angibt, ob ein Duplikat des mindestens einen elektronischen Zugangskontrollclients von der eUICC gespeichert ist.

4. Verfahren gemäß Anspruch 3, wobei Verschlüsselen des mindestens einen elektronischen Zugangskontrollclients Verschlüsseln des mindestens einen Zugangskontrollclients unter Verwendung eines für die eUICC spezifischen Schlüssels umfasst.

5. Verfahren gemäß Anspruch 3, ferner umfassend:
Dem Transfer des verschlüsselten elektronischen Zugangskontrollclients an die mobile drahtlose Vorrichtung folgend:
Empfangen, von der mobilen drahtlosen Vorrichtung, eines von der eUICC gespeicherten elektronischen Zugangskontrollclients, wobei der elektronische Zugangskontrollclient sich von dem mindestens einen elektronische Zugangskontrollclient unterscheidet.

6. Verfahren gemäß Anspruch 1, wobei jeder elektronische Zugangskontrollclient der Vielzahl von elektronischen Zugangskontrollclients ein elektronisches Teilnehmer-Identitätsmodul, eSIM, ist.

7. Vorrichtung zum Verteilen elektronischer Zugangskontrollclients an mobile drahtlose Vorrichtungen, die Vorrichtung umfassend:
Speicher, der eine Vielzahl von elektronischen Zugangskontrollclients speichert, und;
Prozessor, eingerichtet zum:
Bestimmen eines Eigentums an mindestens einem Zugangskontrollclient der Vielzahl von elektronischen Zugangskontrollclients;
Feststellen, ob der mindestens eine elektronische Zugangskontrollclient nicht zuvor dupliziert wurde und
als Folge auf die Feststellung, dass der mindestens eine elektronische Zugangskontrollclient nicht dupliziert wurde:
Verschlüsseln des mindestens einen elektronischen Zugangskontrollclients zum Erzeugen eines verschlüsselten elektronischen Zugangskontrollclients zur Übertragung an die mobile drahtlose Vorrichtung, und
Übertragen des verschlüsselten elektronischen Zugangskontrollclients an die mobile drahtlose Vorrichtung.

8. Vorrichtung gemäß Anspruch 7, wobei das Bestimmen, ob der mindestens eine elektronische Zugangskontrollclient zuvor dupliziert wurde, umfasst:
Ausgabe einer Challenge-Frage an die Electronic Universal Integrated Circuit Card, eUICC, und
Empfangen, von der eUICC, einer Antwort auf die Challenge-Frage, wobei die Antwort angibt, ob ein Duplikat des mindestens einen elektronischen Zugangskontrollclients von der eUICC gespeichert ist.

9. Vorrichtung gemäß Anspruch 8, wobei Verschlüsseln des mindestens einen elektronischen Zugangskontrollclients Verschlüsseln des mindestens einen elektronischen Zugangskontrollclients unter Verwendung eines für die eUICC spezifischen Schlüssels umfasst.

10. Vorrichtung gemäß Anspruch 8, wobei der Prozessor, als Folge auf Übertragen des verschlüsselten elektronischen Zugangskontrollclients an die mobile Vorrichtung, ferner eingerichtet ist zum:
Empfangen, von der eUICC, eines elektronischen Zugangskontrollclients, der sich von dem mindestens einen elektronischen Zugangskontrollclient unterscheidet.

11. Vorrichtung gemäß Anspruch 7, wobei der elektronischen Zugangskontrollclient der Vielzahl von elektronischen Zugangskontrollclients ein elektronisches Teilnehmer-Identitätsmodul, eSIM, ist.

12. Mobile drahtlose Vorrichtung, eingerichtet zur Authentifizierung mit drahtlosen Netzwerken unter Verwendung von elektronischen Zugangskontrollclients, die mobile Vorrichtung umfassend:
ein sicherer Speicher; und
ein Prozessor, eingerichtet zum:
Empfangen, von einer Vorrichtung, die eine Vielzahl von elektronischen Zugangskontrollclients verwaltet, einer Aufforderung zur Ausübung einer Aktion, die angibt, ob ein Duplikat eines elektronischen Zugangskontrollclients, der von der Vorrichtung verwaltet wird, im sicheren Speicher gespeichert ist;
Antworten auf die Aufforderung durch Bewertung einer des sicheren Speichers zugeordneten Challenge-Frage zur Identifizierung, dass der elektronische Zugangskontrollclient kein Duplikat ist; und
Als Antwort auf die Identifizierung, dass der elektronischen Zugangskontrollclient kein Duplikat ist: Empfangen, von der Vorrichtung, des elektronischen Zugangskontrollclients, und Speichern des elektronischen Zugangskontrollclients in dem sicheren Speicher.

13. Mobile drahtlose Vorrichtung gemäß Anspruch 12, wobei der elektronische Zugangskontrollclient gemäß einem Schlüssel verschlüsselt ist, der spezifisch für die mobile drahtlose Vorrichtung ist.

14. Mobile drahtlose Vorrichtung gemäß Anspruch 12, wobei der sichere Speicher eine virtuelle Einheit für eine physische Universal Integrated Circuit Card umfasst.

15. Mobile drahtlose Vorrichtung gemäß Anspruch 12, wobei der elektronische Zugangskontrollclient ein elektronisches Teilnehmer-Identitätsmodul, eSIM, ist.

## Revendications

1. Un procédé de distribution de clients de contrôle d'accès électronique à des dispositifs mobiles sans fil, le procédé comprenant, au niveau d'un appareil qui gère une pluralité de clients de contrôle d'accès électronique :
la détermination d'une titularité d'au moins un client de contrôle d'accès électronique de la pluralité de clients de contrôle d'accès électronique,
la détermination si le au moins un client de contrôle d'accès électronique n'a pas été antérieurement dupliqué ; et
sur détermination que le au moins un client de contrôle d'accès électronique n'a pas été antérieurement dupliqué :
le chiffrement du au moins un client de contrôle d'accès électronique pour produire un client de contrôle d'accès électronique chiffré à transférer au dispositif mobile sans fil, et
le transfert au dispositif mobile sans fil du client de contrôle d'accès électronique chiffré.

2. Le procédé de la revendication 1, dans lequel la détermination de la titularité du au moins un client de contrôle d'accès électronique comprend l'évaluation d'un certificat de sécurité de niveau 3, L3.

3. Le procédé de la revendication 1, dans lequel la détermination si le au moins un contrôle d'accès électronique n'a pas été antérieurement dupliqué comprend :
la délivrance, à une Carte électronique de Circuit Intégré Universel, eUICC, incluse dans le dispositif mobile sans fil, d'une question secrète et
la réception, en provenance de la eUICC, d'une réponse à la question secrète, la réponse indiquant si un duplicata du au moins un client de contrôle d'accès électronique est ou non stocké par la eUICC.

4. Le procédé de la revendication 3, dans lequel le chiffrement du au moins un client de contrôle d'accès électronique comprend le chiffrement du au moins un client de contrôle d'accès électronique par utilisation d'une clé qui est spécifique à la eUICC.

5. Le procédé de la revendication 3, comprenant en outre :
à la suite du transfert au dispositif mobile sans fil du client de contrôle d'accès électronique chiffré :
la réception, en provenance du dispositif mobile sans fil, d'un client de contrôle d'accès électronique stocké par la eUICC, le client de contrôle d'accès électronique étant différent du au moins un client de contrôle d'accès électronique.

6. Le procédé de la revendication 1, dans lequel chaque client de contrôle d'accès électronique de la pluralité de clients de contrôle d'accès électronique est un Module électronique d'Identification d'Abonné, eSIM.

7. Un appareil destiné à la distribution de clients de contrôle d'accès électronique à des dispositifs mobiles sans fil, l'appareil comprenant :
une mémoire qui stocke une pluralité de clients de contrôle d'accès électronique ;
et un processeur, configuré pour assurer :
la détermination d'une titularité d'au moins un client de contrôle d'accès électronique de la pluralité de clients de contrôle d'accès électronique,
la détermination si le au moins un client de contrôle d'accès électronique a été antérieurement dupliqué ; et
sur détermination que le au moins un client de contrôle d'accès électronique n'a pas été antérieurement dupliqué :
le chiffrement du au moins un client de contrôle d'accès électronique pour produire un client de contrôle d'accès électronique chiffré à transférer au dispositif mobile sans fil, et
le transfert au dispositif mobile sans fil du client de contrôle d'accès électronique chiffré.

8. L'appareil de la revendication 7, dans lequel la détermination si le au moins un contrôle d'accès électronique a été antérieurement dupliqué comprend :
la délivrance, à une Carte électronique de Circuit Intégré Universel, eUICC, incluse dans le dispositif mobile sans fil, d'une question secrète et
la réception, en provenance de la eUICC, d'une réponse à la question secrète, la réponse indiquant si un duplicata du au moins un client de contrôle d'accès électronique est ou non stocké par la eUICC.

9. L'appareil de la revendication 8, dans lequel le chiffrement du au moins un client de contrôle d'accès électronique comprend le chiffrement du au moins un client de contrôle d'accès électronique par utilisation d'une clé qui est spécifique à la eUICC.

10. L'appareil de la revendication 8, comprenant en outre, à la suite du transfert au dispositif mobile sans fil du client de contrôle d'accès électronique chiffré :
la réception, en provenance de la eUICC, d'un client de contrôle d'accès électronique stocké par la eUICC, le client de contrôle d'accès électronique étant différent du au moins un client de contrôle d'accès électronique.

11. L'appareil de la revendication 7, dans lequel chaque client de contrôle d'accès électronique de la pluralité de clients de contrôle d'accès électronique est un Module électronique d'Identification d'Abonné, eSIM.

12. Un dispositif mobile sans fil configuré pour s'authentifier auprès de réseaux sans fil par utilisation de clients de contrôle d'accès électronique, le dispositif mobile sans fil comprenant :
une mémoire sécurisée ; et
un processeur, configuré pour :
recevoir, en provenance d'un appareil qui gère une pluralité de clients de contrôle d'accès électronique, une requête d'exécution d'une action qui identifie si un duplicata d'un client de contrôle d'accès électronique géré par l'appareil est stocké au sein de la mémoire sécurisée ;
répondre à la requête par évaluation d'une question secrète associée à la mémoire sécurisée pour identifier que le client de contrôle d'accès électronique n'est pas un duplicata ; et
en réponse à l'identification que le client de contrôle d'accès n'est pas un duplicata :
recevoir, en provenance de l'appareil, le client de contrôle d'accès électronique, et stocker le client de contrôle d'accès électronique dans la mémoire sécurisée.

13. Le dispositif mobile sans fil de la revendication 12, dans lequel le client de contrôle d'accès électronique est chiffré en fonction d'une clé qui est spécifique au dispositif mobile sans fil.

14. Le dispositif mobile sans fil de la revendication 12, dans lequel la mémoire sécurisée comprend une entité virtuelle pour une carte de circuit intégré universel physique.

15. Le dispositif mobile sans fil de la revendication 12, dans lequel le client de contrôle d'accès électronique est un Module électronique d'Identité d'Abonné, eSIM.
